## Europäisches Patentamt

## European Patent Office

## Office européen des brevets

(11) Veröffentlichungsnummer: **0 314 987 B1**

(12) **EUROPÄISCHE PATENTSCHRIFT**

(45) Veröffentlichungstag der Patentschrift: **29.01.92**

(21) Anmeldenummer: **88117458.5**

(22) Anmeldetag: **20.10.88**

(51) Int. Cl.⁵: **C09C 1/34**, C01B 31/30, C22B 34/32, C04B 35/12

(54) Chromoxidgrün, Verfahren zu seiner Herstellung und dessen Verwendung.

(30) Priorität: **31.10.87 DE 3736994**

(43) Veröffentlichungstag der Anmeldung: **10.05.89 Patentblatt 89/19**

(45) Bekanntmachung des Hinweises auf die Patenterteilung: **29.01.92 Patentblatt 92/05**

(84) Benannte Vertragsstaaten: **AT BE DE FR GB IT NL**

(56) Entgegenhaltungen: **GB-A- 928 170**

(73) Patentinhaber: **BAYER AG**

**W-5090 Leverkusen 1 Bayerwerk(DE)**

(72) Erfinder: **Rademachers, Jakob, Dr. Hoeninghausstrasse 34 W-4150 Krefeld 12(DE)** Erfinder: **Räde, Dieter, Dr. Appellweg 10 W-4150 Krefeld-Bockum(DE)** Erfinder: **Höfs, Hans-Ulrich, Dr. Buschstrasse 149 W-4150 Krefeld 1(DE)** Erfinder: **Teichmann, Günther, Dr. Kruse Bömke 3 W-4150 Krefeld 1(DE)** Erfinder: **Trenczek, Gerhard, Dr. Deswatinesstrasse 47 W-4150 Krefeld 1(DE)**

EP 0 314 987 B1

## Beschreibung

Die vorliegende Erfindung betrifft verbessertes Chromoxidgrün sowie dessen Verwendung.

Chromoxidgrün stellt ein bedeutendes anorganisches Pigment dar. Das im Korundgitter kristallisierende Oxid des dreiwertigen Chroms ist seit langem bekannt. Es ist ein bis zu hohen Temperaturen thermisch und mechanisch stabiles, gegen die meisten Chemikalien inertes Pigment mit hoher Farb- und Deckkraft. Infolge seines tiefgrünen Farbtons nimmt est einen wichtigen Platz innerhalb der anorganischen Pigmente ein.

Wegen seiner chemischen Resistenz dient Chromoxidgrün ebenfalls als Ausgangsprodukt bei der Herstellung von Feuerfestmaterialien, die unter anderem zur Auskleidung von Schmelzöfen oder -wannen, z.B. bei der Glasherstellung, verwendet werden. Ebenso wird Chromoxidgrün, insbesondere aufgrund seiner Härte, zur Oberflächenveredlung nach dem Flamm- und Plasmaspritzverfahren eingesetzt. Das dreiwertige Oxid dient auch als Ausgangsmaterial für Chromkarbid und Chrommetall.

Die Gewinnung der Chromoxidpigmente erfolgt hauptsächlich durch Reduktion von Alkalichromaten, wobei man von festen Salzen oder von wäßrigen Lösungen ausgeht. Als Reduktionsmittel werden entweder elementarer Schwefel, schwefelhaltige Verbindungen, Kohlenstoff oder kohlenstoffhaltige Verbindungen eingesetzt. Die Reaktion erfolgt bei Normaldruck oder unter erhöhtem Druck bis zu Temperaturen um 1000°C. Nach Abkühlen der festen Reaktionsprodukte werden die gebildeten löslichen Salze vom Chrom-(III)-Oxid durch Anmaischen mit Wasser, Filtrierung und Waschen entfernt. Anschließend erfolgt die Trocknung des Filterkuchens und die Mahlung. Die Teilchengröße und damit der Farbton variieren hauptsächlich in Abhängigkeit von der Temperatur (Ullmanns Encyklopädie der technischen Chemie, 4. Auflage, Band 18, S. 605, 1979). Bei einem kleineren Primärkorndurchmesser erhält man ein gelbstichiges, helleres Grün, während größere Korngrößen zu blaustichigen, dunkleren Grünpigmenten führen.

Nachteilig an den auf dem Markt befindlichen Chromoxidgrüns ist die Tatsache, daß sie bei der Anmaischung einen unbefriedigend großen Wasserbedarf aufweisen. Dies kann z.B. bei der Einfärbung von Betonwaren zu Beeinträchtigungen der Festigkeit führen, bei der Herstellung von Feuerfestprodukten wird eine nicht erwünschte Porenbildung bzw. eine zu große Brennschwindung beobachtet. Zudem neigen diese Chromoxidgrüns in nachhaltiger Weise zu Verklebungen und Klumpenbildung, so daß häufig Schwierigkeiten bei Dosier-und Mischvorgängen auftreten.

Aufgabe der vorliegenden Erfindung ist es, verbessertes Chromoxidgrün zur Verfügung zu stellen, welches die beschriebenen Nachteile nicht aufweist.

Es wurde nun gefunden, daß diese Anforderungen hervorragenderweise erfüllt werden durch Chromoxidgrün, welches kohlenstoff- und/oder phosphorhaltige Substanzen aufweist und in Form kugelförmiger Agglomerate vorliegt. Dieses Chromoxidgrün ist Gegenstand dieser Erfindung. Durch den Gehalt an C-und/oder P-haltigen Verbindungen wird der Wasserbedarf des Chromoxids, ausgedrückt durch die Wasserzahl, auf 10 bis 40g/100g erniedrigt. Die kugelige Agglomeratform verbessert die Dosierbarkeit des Chromoxidgrüns.

Die Wasserzahl gibt den Wasserbedarf des Pigmentes an. Die Bestimmung der Wasserzahl erfolgt wie bei Bestimmung der Ölzahl nach DIN 53 199 vom August 1965, wobei anstelle des Leinöls destilliertes oder deionisiertes Wasser eingesetzt werden. Die Arbeitsgeräte sind die gleichen wie bei der Bestimmung der Ölzahl.

Ebenfalls gut bewährt hat sich eine andere Arbeitsweise, bei der solange Wasser zu einer Pigmentmenge in einem Becherglas zugegeben und vermengt wird, bis eine fließende Paste erhalten wird. Die Beschreibung dieser Methode ist in den Merkblättern "Bayer-Pigmente Nr. 2.1.7, Bestell-Nr. AC 14 847 vom 01.05.1973" enthalten:

"Es werden 10 g Pigment auf ± 0,1 g genau abgewogen und in ein Becherglas gegeben. Unter Rühren und Kneten mit dem Kunststoffstab läßt man tropfenweise destilliertes Wasser zulaufen. Der Endpunkt ist dann erreicht, wenn die wäßrige Suspension des Pigments frei zerfließt. Die Höhe der Wasserzahl ist abhängig von der Kraft, die beim Einarbeiten des Wassers in das Pigment aufgewendet wird. Zur genauen Erkennung des Endpunktes ist eine gewisse Übung erforderlich. Da die Wasserzahl in g Wasser/100 g Pigment angegeben wird, errechnet sich diese aus: Wasserzahl = ml Wasser x 10". Die nachfolgend angegebenen Wasserzahlen beruhen auf der letzteren Methode.

Die marktüblichen Chromoxidpigmente zeigen hohe Wasserzahlen von weit über 50 g/100 g.

Das erfindungsgemäße Chromoxidgrün liegt in Form kugelförmiger Agglomerate mit einem Durchmesser von 0,01 bis 1 mm vor.

Dieses Chromoxidgrün zeichnet sich durch eine hervorragende Fließfähigkeit, gute Dosierbarkeit und eine geringe Staubungsneigung aus.

Die BET-Oberfläche des erfindungsgemäßen Chromoxidgrün liegt in einen Bereich von 1 bis 20 $m^2$/g, vorzugsweise in einem Bereich von 2 bis 10 $m^2$/g. (BET-Meßmethode nach DIN 66 131, Abschnitt 6, Okt.

1973: 5-Punktmethode, Meßgas: Stickstoff, Adsorption bei der Temperatur des siedenden Stickstoffs, Annahme des Flächenbedarfs einer Stickstoffmolekel von 0,162 nm$^2$, Vorbehandlung: 1 Stunde Ausheizen im Stickstoffstrom bei 130° C). Bei Chromoxiden mit deutlich höheren BET-Oberflächen, die z.B. durch Glühen von reduktiv aus Chromatlösungen erhaltenen Chromhydroxiden gewonnen werden können, werden nach dem erfindungsgemäßen Verfahren zwar nicht klumpende Pigmente, jedoch solche mit höherem Wasserbedarf erhalten.

Das erfindungsgemäße Chromoxidgrün zeichnet sich durch den Gehalt von 0,1 bis 2 Gew.-% an C- und/oder P-haltigen Substanzen aus, liegt in Form kugelförmiger Agglomerate eines Durchmessers von 0,01 bis 1 mm vor und wird aus wäßriger Suspension von Chromoxid mit einer BET-Oberfläche von 1 bis 20 m$^2$/g durch Zerstäubungstrocknung erhalten, wobei der wäßrigen Suspension Sulfonsäure-, Polyphosphorsäure und/oder Polyacrylsäureverbindungen in Mengen von 0,1 bis 2 Gew.-% zugesetzt wurden.

In der DE-OS 16 42 990 werden bereits Pigmentgranulate beschrieben, die durch Trockengranulierung im Fluidmischer durch Aufsprühen von polaren organischen Substanzen, von flüssigen organischen Verbindungen oder von wäßrige Lösungen von Harzseifen oder Ligninsulfonaten erhalten werden können. Die beschriebenen Granulate liegen im Durchmesser bei 0,5 bis 5 mm. Der Anteil des zugesetzten Granulierhilfsmittels geht aus der DE-OS 15 42 058 mit 2 bis 40% hervor.

Als Granuliergut wird unter anderen Pigmenten auch ein Chromoxidgrün-Pigment genannt. Versuche im heiz- und kühlbaren Fluidmischer mit schnell laufendem Rotor ergaben bei der Kombination von Chromoxidgrün GN (Produkt der Bayer AG) mit 2 Gew.-% Ligninsulfonat als wäßrige Lösung verschiedener Konzentration kein granulatähnliches Produkt. Vielmehr klebte das Chromoxid bereits zu Anfang des Versuches größtenteils an der Mischerwandung. Bei weiterer Zugabe von Ligninsulfonatlösung bis zum Übergang zur Paste konnte die Bildung kugelförmiger Agglomerate nicht beobachtet werden.

Die erfindungsgemäßen Produkte werden dagegen bei Zugabe bis zu 2 Gew.-% der Zusatzstoffe als Agglomerate mit ausgeprägter Kugelform erhalten.

Die Zusatzstoffe liegen zwischen 0,1 und 2,0 Gew.-%, vorzugsweise zwischen 0,2 und 1,0 Gew.-% (bezogen auf das Chromoxidgrün) vor. Niedrigere Gehalte führen nicht zur gewünschten niedrigeren Wasserzahl. Neben der meist unerwünschten Absenkung des Chromoxidgehalts im fertigen Pulver bei höheren Gehalten, neigen Zerstäubungstrockner dann zur Belegung mit relativ fest anhaftenden Chromoxidkrusten.

Die erfindungsgemäß erhaltenen Chromoxide weisen, in Abhängigkeit vom Ausgangsmaterial und von Art und Konzentration der zugesetzten Verbindung(en), deutlich erniedrigte Wasserzahlen zwischen 10 und 40 g /100 g auf.

Der Durchmesser der kugelförmigen Teilchen liegt, je nach Kristallitgröße des Chromoxidgrüns, der Konzentration der Suspension, der Zusatzmenge einer oder mehrerer der genannten Verbindungen, der Art des Zerstäubers und gegebenenfalls dessen Düsenöffnung, bei 0,01 bis 1,0 mm. Deutlich feinere Agglomerate neigen wiederum verstärkt zum Verkleben und zum Verklumpen, größere bereiten technische Schwierigkeiten bei der Herstellung.

Das Verfahren zur Herstellung des erfindungsgemäßen verbesserten Chromoxidgrüns wird in Zerstäubungstrocknern durchgeführt, wobei sowohl herkömmliche Düsentrockner mit Einstoff- wie mit Zweistoffdüsen als auch Trockner mit Zerstäubungsscheibe geeignet sind, da mit diesen durch die Wirkung der genannten Zusätze ein sehr gut riesel- und fließfähiges Trockenmaterial erhalten werden kann. Auch ist das Verdüssen in Reaktionszyklonen oder in Fließbett-Trocknern oder in Kombination von Zerstäubungs- und Fließbett-Trocknern möglich.

Die hervorragende Riesel- und Fließfähigkeit der erfindungsgemäß über Sprühtrocknung hergestellten Chromoxidgrünpulver, verbunden mit einer minimierten Neigung zur Staubentwicklung, ist insbesondere beim praktisch rückstandslosen und schnellen Befüllen und Entladen von Transport- und Stapelbehältnissen, insbesondere von Silos, beim Dosieren und Vermischen mit anderen Substanzen und auch beim Flamm- und Plasmaspritzen von Vorteil. Herkömmliche Chromoxidgrünpigmente neigen sehr stark zum Verbacken und Verkleben mit den entsprechenden Problemen beim Entleeren von Vorrats- und Transportbehältnissen, beim Dosieren und beim Vermischen mit anderen Substanzen durch Granulierung und Bildung von Anbackungen.

Ein Maß für die Riesel- und Fließfähigkeit von feinteiligen Pulvern ist das Ausfließverhalten aus Trichtern. Bei frei fließenden Pulvern können die Ausflußzeiten direkt als Maß der Fließ- und Rieselfähigkeit dienen. Fließt das Pulver nur stockend und nur unter Nachhilfe durch Klopfen an den Trichter aus, kann eine qualititive Beurteilung erfolgen. Bei dieser Beurteilung ist die Größe des verwendeten Trichters und dessen Ausflußöffnung in Relation zu den bei der technischen Verwendung vorkommenden Dimensionen zu sehen.

Das Wiederanmaischen von bereits getrocknetem und gemahlenem Chromoxidgrün zum Zwecke des Zusatzes einer oder mehrerer der genannten zuzusetzenden Verbindungen kann ebenfalls durchgeführt werden.

Gegenstand dieser Erfindung ist auch die Verwendung des erfindungsgemäßen Chromoxidgrüns zur Herstellung von Chrommetall, Chromkarbid, Feuerfestmaterialien oder zur Einfärbung von Substanzen

Anhand nachfolgender Beispiele soll das Verfahren näher erläutert werden, es ist darin jedoch keine Einschränkung auf die Beispiele zu sehen.

Im Falle der aufgeführten Beispiele wurde die Bestimmung der Auslaufzeit mit dem DIN-Becher 4 (DIN 53 211 vom April 1974) analog auf die zu prüfenden Pulver angewandt; die Angabe erfolgt in DIN-Sekunden. Zur besseren Differenzierung wurden die Auslaufzeiten zusätzlich mit einem dem DIN-Becher 4 voll entsprechenden Auslauftrichter mit 6 mm-Düse, Becher 6 genannt, bestimmt; die Angabe erfolgt in Sekunden. Die gemessenen Werte sind in Tabelle 1 und 2 aufgelistet. Die erfindungsgemäßen zerstäubungsgetrockneten Chromoxidgrünpulver fließen frei und ohne Klopfen aus dem Becher 6.

### Beispiel 1

133 kg Filterkuchen mit einem Feststoffgehalt von 75 Gew.-%, geglühten und gewaschenen Rohmaterials für Chromoxidgrün GX (Handelsprodukt der Bayer AG), werden mit 34 kg vollentsalztem Wasser und 0,75 kg Polystabil AMV-Lösung - entsprechend 0,3 kg Ammoniumpolyacrylat - (Handelsprodukt der Chemischen Fabrik Stockhausen GmbH) homogen verrührt. Die so erhaltene Suspension wird auf einem Sprühtrockner mit Zerstäuberscheibe, die einen Durchmesser von 120 mm aufweist und mit 8 Düsen von 7 mm Durchmesser bestückt ist, bei einer Drehzahl der Zerstäuberscheibe von 16 400 min$^{-1}$ in einem nach dem Gleichstromprinzip geführten Strom heißer Brennerabgase bei einer Eintrittstemperatur von 480°C und einer Austrittstemperatur von 135°C getrocknet.

Die Eigenschaften dieses Produktes, sowie die der aus den nachfolgenden Beispielen erhaltenen Produkte gehen aus Tabelle 1 hervor.

### Beispiel 2

160 kg Filterkuchen mit einem Gehalt von 60,5 Gew.-%, geglühten und gewaschenen $Cr_2O_3$-Rohmaterials für Versuchsprodukte PK 5304 (Handelsprodukt der Bayer AG), werden mit 0,75 kg Dispex N 40-Lösung - entsprechend 0,3 kg Na-Polyacrylat - (Handelsprodukt der Allied Colloids Manufacturing GmbH) homogen verrührt. Die so erhaltene Suspension wird wie in Beispiel 1 getrocknet. Das Produkt weist eine BET-oberfläche von 6,9 $m^2$/g auf.

### Beispiel 3

67 kg Filterkuchen mit einem Feststoffgehalt von 75 Gew.-%, geglühten und gewaschenen Rohmaterials für Chromoxidgrün GN (Handelsprodukt der Bayer AG), werden mit 16 kg vollentsalzten Wassers, 0,215 kg Natriumligninsulfonat Type 220 Zewa EF Pulver und 0,285 kg Natriumligninsulfonat Type 210 Zewa S Pulver, beide Produkte der Lignin-Chemie Waldhof-Holmen GmbH, homogen verrührt. Die so erhaltene Suspension wird bei einer Eintrittstemperatur von 470°C und einer Austrittstemperatur von 140°C wie in Beispiel 1 getrocknet.

### Beispiel 4

100 kg Versuchsprodukt PK 5304 (Handelsprodukt der Bayer AG) werden mit 67 kg vollentsalzten Wassers und 0,30 kg Natriumhexametaphosphat homogen verrührt. Die so erhaltene Suspension wird wie in Beispiel 1 aufgearbeitet.

### Beispiel 5

100 kg Versuchsprodukt PK 5304 (Handelsprodukt der Bayer AG) werden mit 68 kg vollentsalzten Wassers, 0,25 kg Dispex N 40-Lösung (Handelsprodukt der Allied Colloids Manufacturing GmbH) und 0,60 kg Polysalz F - Na-Polyacrylat-(Handelsprodukt der BASF AG) homogen verrührt. Die so erhaltene Suspension wird wie in Beispiel 1 aufgearbeitet.

### Beispiel 6

100 kg Chromoxidgrün GN mit einer BET-Oberfläche von 3,9 m$^2$/g (Handelsprodukt der Bayer AG) werden mit 67 kg vollentsalzten Wassers und 0,75 kg Polystabil S 312-Lösung - entsprechend 0,3 kg Na-Polyacrylat - (Handelsprodukt der Chemischen Fabrik Stockhausen GmbH) homogen verrührt. Die so erhaltene Suspension wird wie im Beispiel 1 aufgearbeitet.

Beispiel 7

100 kg Chromoxidgrün GX einer BET-Oberfläche von 3,2 m$^2$/g (Handelsprodukt der Bayer AG) werden mit 67 kg vollentsalzten Wassers und 0,75 kg Polystabil S 312-Lösung (Handelsprodukt der Chemischen Fabrik Stockhausen GmbH) homogen verrührt. Die so erhaltene Suspension wird wie im Beispiel 1 aufgearbeitet. Das erhaltene Produkt weist eine BET-Oberfläche von 3,0 m$^2$/g auf.

Vergleichsbeispiel A

133 kg Filterkuchen mit einem Feststoffgehalt von 75 Gew.-%, geglühten und gewaschenen Rohmaterials für Chromoxidgrün GN (Handelsprodukt der Bayer AG), werden mit 180 kg vollensalzten Wassers homogen verrührt. Die so erhaltene Suspension wird wie im Beispiel 1 aufgearbeitet.

Die Eigenschaften dieses Produkts sowie die der aus den nachfolgenden Vergleichsbeispielen erhaltenen Produkte gehen aus Tab. 2 hervor.

Vergleichsbeispiel B

100 kg Chromoxidgrün GN (Handelsprodukt der Bayer AG) werden mit 138 kg vollentsalzten Wassers homogen verrührt. Die so erhaltene Suspension wird wie im Beispiel 1 aufgearbeitet.

Gegenbeispiel

In einem auf 80 bis 90°C aufgeheizten Fluidmischer (Herstellerfirma Henschel, Typ FM 40 A) wurden 4 kg Chromoxid GN (Produkt der Bayer AG) gegeben. Nach Einschalten der Fluidisierwerkzeuge gelangten 1,18 kg einer wäßrigen Lösung mit 49,15 Gew.-% Natriumligninsulfonat (Zewa-Harz-Paste 20 der Lieferfirma Chem. Werke Zell-Wildshausen) über einen Trichter innerhalb von 15 min in den Mischer. Es bildeten sich keine Granalien. Das Produkt klebte zum größten Teil an der Wandung.

Nach Abwandlung der Versuchsbedingungen durch Zugabe von 8 kg Chromoxid GN mit 2,36 kg Ligninsulfonat-Lösung ergab sich das gleiche Erscheinungsbild.

Nach Zugabe von 16 kg Chromoxid GN und 640 g einer 49,15gew.-%igen Na-Ligninsulfonatlösung (entsprechend 2 Gew.-% Na-Ligninsulfonat auf Chromoxid) innerhalb von 30 min blieb das Chromoxid als Pulver unverändert im Mischer. Granalien konnten keine erhalten werden.

Bei Zugabe von 1,28 kg einer 25%igen Ligninsulfonatlösung über 25 Minuten bei sonst gleichen Bedingungen blieb das Chromoxid ebenfalls unverändert als Pulver ohne Bildung von Granalien. Bei allen Versuchen verdampfte das Wasser bei der hohen Mischtemperatur.

Nach Zugabe von Wasser in 100-ml-Portionen nach Abstellen der Heizung und Abkühlen des Mischerinhaltes bildeten sich ebenfalls keine Granalien. Vielmehr liebte das Chromoxid zum Teil an der Wand. Nach weiterer Zugabe von Wasser bildete sich ein Paste.

Tabelle 1

| Beispiel | Wasserzahl [g/100g] | Auslaufzeit DIN-Becher 4 (DIN 53 211) [DIN-Sekunden] | Auslaufzeit Becher 6 (analog DIN 53 211) [Sekunden] |
|---|---|---|---|
| 1 | 31 | 110 | 40 |
| 2 | 21 | 150 | 35 |
| 3 | 31 | 51 | 21 |
| 4 | 24 | > 180 mit Klopfen | 35 |
| 5 | 21 | 60 | 30 |
| 6 | 17 | 75 ohne Klopfen | 24 |
| 7 | 16 | > 240 mit Klopfen | 30 |

5

Tabelle 2

| Vergleichsbeispiel | Wasserzahl [g/100g] | Auslaufzeit DIN-Becher 4 (DIN 53 211) [DIN-Sekunden] | Auslaufzeit Becher 6 (analog DIN 53 211) [Sekunden] |
|---|---|---|---|
| A | 66 | läuft nicht aus | läuft nicht aus |
| B | 121 | läuft nicht aus | läuft nicht aus |

**Patentansprüche**

1. Chromoxidgrün mit einem Gehalt von 0,1 bis 2 Gew.% an C- und/oder P-haltigen Substanzen in Form kugelförmiger Agglomerate eines Durchmessers von 0,01 bis 1 mm, welches aus einer wäßrigen Suspension von Chromoxidgrün mit einer BET-Oberfläche von 1 bis 20 $m^2/g$ durch Zerstäubungstrocknung erhalten wird, wobei der wäßrigen Suspension Sulfonsäure-, Polyphosphorsäure- und/ oder Polyacrylsäureverbindungen in Mengen von 0,1 bis 2 Gew.% zugesetzt wurden.

2. Verwendung von Chromoxidgrün gemäß Anspruch 1 zur Herstellung von Chrommetall, Chromkarbid, Feuerfestmaterialien oder zur Einfärbung von Substraten.

**Claims**

1. Chromium oxide green with a content of 0.1 to 2% by weight C- and/or P-containing substances in the form of spherical agglomerates 0.01 to 1 mm in diameter, which is obtained from an aqueous suspension of chromium oxide green having a BET surface of 1 to 20 $m^2/g$ by spray-drying, sulfonic acid, polyphosphoric acid and/or polyacrylic acid compounds being added to the aqueous suspension in quantities of 0.1 to 2% by weight.

2. The use of the chromium oxide green claimed in claim 1 for the production of chromium metal, chromium carbide, refractory materials or for pigmenting substrates.

**Revendications**

1. Vert d'oxyde de chrome ayant une teneur en substances contenant du carbone et/ou du phosphore de 0,1 à 2 % en poids, sous forme de corps agglomérés sphériques d'un diamètre de 0,01 à 1 mm, qui est obtenu à partir d'une solution aqueuse de vert d'oxyde de chrome ayant une surface BET de 1 à 20 $m^2/g$ par séchage par pulvérisation, la suspension aqueuse ayant été additionnée de composés d'acides sulfonique, polyphosphorique et/ou polyacrylique en quantités de 0,1 à 2 % en poids.

2. Utilisation du vert d'oxyde de chrome suivant la revendication 1 pour la production de chrome métallique, de carbure de chrome, de matériaux réfractaires ou pour la coloration de substrats.